(19) Europäisches Patentamt

European Patent Office

Office européen des brevets

(11) EP 1 237 338 A2

(12) EUROPEAN PATENT APPLICATION

(43) Date of publication:
04.09.2002 Bulletin 2002/36

(51) Int Cl.$^7$: H04L 27/233

(21) Application number: 02250942.6

(22) Date of filing: 12.02.2002

(84) Designated Contracting States:
AT BE CH CY DE DK ES FI FR GB GR IE IT LI LU
MC NL PT SE TR
Designated Extension States:
AL LT LV MK RO SI

(30) Priority: 15.02.2001 GB 0103669

(71) Applicant: CENTRAL RESEARCH
LABORATORIES LIMITED
Hayes, Middlesex, UB3 1HH (GB)

(72) Inventors:
• Alcock, Robert David
Iver, Buckinghamshire SL0 0DL (GB)
• Scruby, Gavin John
Woking, Surrey, GU21 3RH (GB)

(74) Representative: Sharp, Alan Cooper et al
QED I.P. Services Limited,
Dawley Road
Hayes, Middlesex UB3 1HH (GB)

(54) Carrier frequency estimation for phase-modulated signals

(57) A method of estimating the carrier frequency of a phase-modulated signal involves a) extracting the pulse train from the signal, b) making an initial estimate of the carrier frequency, c) estimating the error in the initial estimate, d) using this error to generate a more accurate estimate of the carrier frequency, and repeating steps c) and d) until a sufficiently accurate estimate of the carrier frequency is obtained. Step c preferably involves extracting the phase information in the signal, mixing the signal down to 0 Hz by removing the initial estimate of the carrier frequency to give complex IQ data, calculating the phase of the signal as a function of time, calculating the mean phase, wrapping the data into a phase range equal to the size of the phase jump, and calculating the error in the initial estimate of the carrier frequency from the gradient of this graph.

Fig.9.

110 Extract Pulse Train

112 Estimate Initial Carrier Frequency, $f_C^I$

114 Estimate Carrier Frequency Error $f_e$

116 Generate Referred Carrier Frequency Estimate

118 Finished ? — No

Yes

Stop

EP 1 237 338 A2

**Description**

The present invention relates to a method of estimating the carrier frequency of a phase-modulated signal.

Modulation is the process of superimposing the characteristics of a signal onto a carrier wave so that the information contained by the signal can be transmitted by the carrier wave. In a phase modulated signal, the relative phase of the carrier wave is varied to encode the information contained in the signal. In communications it is often necessary to measure the frequency of the carrier wave. For most purposes this can be achieved by examining the frequency profile of the transmitted signal in the Fourier domain, where the highest peak of the profile represents the strongest frequency (i.e., the carrier) component. In certain situations, however, the accuracy of phase measurements required is far greater than that obtained using a Fourier transform, and therefore more accurate techniques are required.

According to the present invention there is provided a method of estimating the carrier frequency of a phase-modulated signal as specified in the claims.

A phase-modulated signal to which the method of the present invention can be successfully applied must have the following properties:

1. The signals must be phase-modulated continuous signals, where the modulation is in the form of quick phase changes (i.e. jumps or transitions) when compared to the rest of the signal;

2. The approximate size of the phase jumps must be known, and the size must be even such that an integer multiple of jumps fits into $2\pi$;

3. Other than during phase modulation the signals must have nearly constant frequency (since we are trying to measure a constant frequency); and

4. Phase jumps should only make up a small proportion of the total signal - approximately 30% is acceptable.

As an example, the following embodiment describes binary digital signals, but digital signals having a number base of greater than 2 can be used in the same manner.

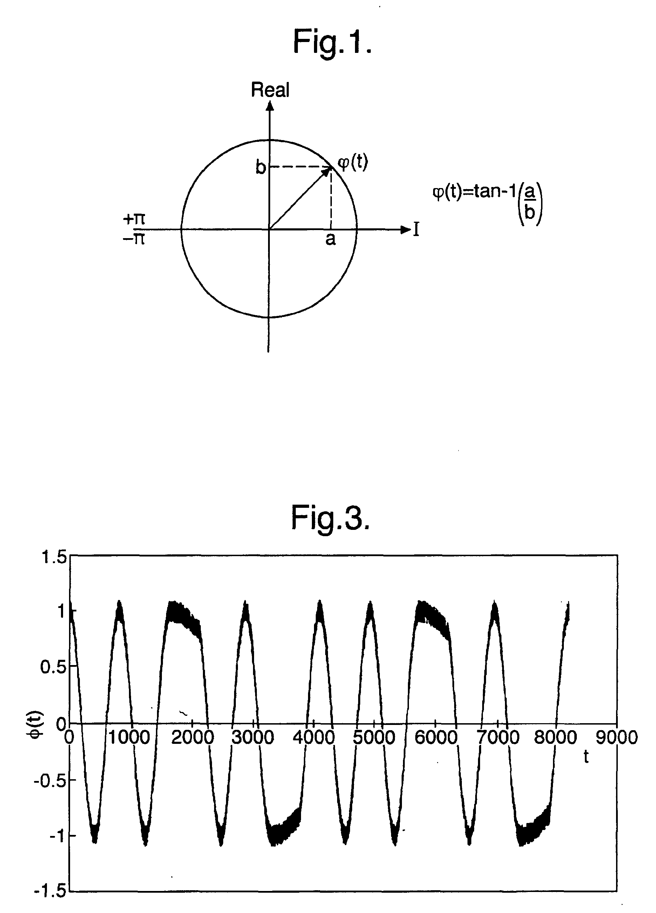

The phase $\phi(t)$ of a signal can be represented graphically by a vector in the real-imaginary plane, as shown in Figure 1. The amplitude of the signal is given by the magnitude of the vector, and the phase is given by the arc tangent of the ratio of the signals in the Q (real) and I (imaginary) channels, i.e., $\tan^{-1} {}^{a}/_{b}$. Unfortunately individual phase measurements represented in this way are limited to within a range of size of $2\pi$, as illustrated by the following example. The phase of a sinusoidal signal $x(t) = \sin(\omega t)$ increases linearly with time, and the gradient of the plot of this function is proportional to the frequency, $\omega$. However, since direct phase measurements are limited to within the range of $-\pi$ to $+\pi$, the phase plot appears as a "sawtooth" shape over time: initially the phase increases linearly until it reaches the value of $+\pi$, it then jumps discontinuously to $-\pi$ before increasing linearly again. The process of identifying and removing these discontinuities to recover the true linear phase relationship is known as phase unwrapping. Removing a discontinuity in the phase plot involves placing points in the correct phase range by adding $\pm 2\pi$ to all points after the discontinuity, depending on whether the discontinuity is a positive or a negative jump.

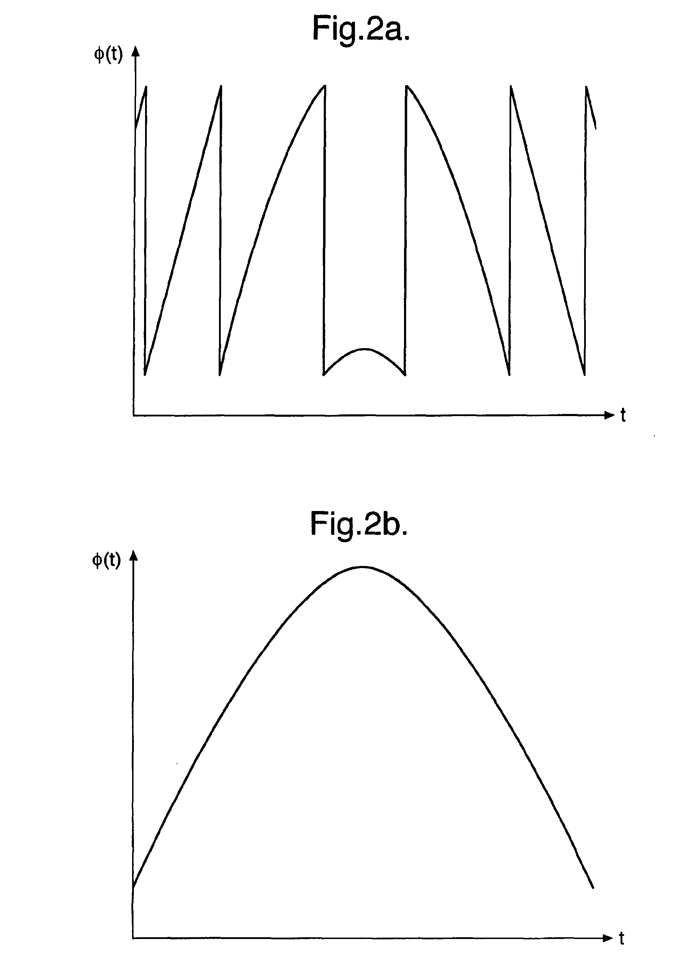

An example of a phase wrapped signal and the respective phase unwrapped signal is shown in Figure 2a and Figure 2b, respectively. It is obvious from Figure 2a that when trying to unwrap the wrapped phase, the problem lies in detecting the discontinuities.

For a simple unmodulated carrier wave of constant frequency, an accurate measure of frequency can be gained by unwrapping the phase to produce a phase plot, and fitting a straight line to this phase plot. The gradient of this straight line is proportional to the frequency of the signal. This technique is used in US Patent No. 5,019,823 (Thorn EMI). Accurate frequency measurements can be obtained using this technique because all the data in the signal are being used. However, when the data are noisy it is difficult to unwrap the phase to a straight line because phase discontinuities can occur over several samples and it can be difficult to correctly identify these phase discontinuities. If just one point is incorrectly placed in the wrong phase range the accuracy of the result is ruined, as each following point is unwrapped using the preceding point.

For complicated signals, such as phase modulated signals, phase unwrapping becomes unreliable because of the presence of phase transitions. During phase transitions the frequency and phase of the signal varies rapidly, so it is difficult to identify the phase discontinuities and shift the proceeding phase values into the correct phase range. Even if phase unwrapping is performed correctly, the fact that the phase during the transitions covers the whole range $[-\pi..\pi]$ stops a straight line from being fitted to the data. The conventional way around this is to know where the phase transitions are beforehand and then remove them. This allows the data to be unwrapped and a straight line to be fitted, but fails when noise is present. Of course, the situations where little noise is present and the positions of all the transitions are known to begin with are few and far between.

A method is therefore required that neither relies on prior knowledge of the previous sample's phase (and is therefore robust to noise), nor requires the positions (or the number) of transitions to be known. The method should also be independent of the exact form of the signal during phase transitions for widest applicability.

An aim of the present invention is to provide a method for estimating the frequency of the carrier wave of a phase-modulated signal. A further aim of the present invention is to provide a method for estimating the frequency of the carrier wave of a phase-modulated signal in the presence of noise.

An embodiment of the invention will now be described, by way of example only, with reference to the accompanying Figures, in which:-

Figure 1 is a graphical representation of the measured phase $\phi(t)$ of a complex signal;

Figures 2a and 2b show a graph of a wrapped and unwrapped signal, respectively;

Figure 3 shows a graph of the real part of the complex signal;

Figure 4 shows a graph of the phase of the raw data;

Figure 5 shows a graph of phase data wrapped from 0 to $\pi$;

Figure 6 shows a graph of the phase of the signal after one iteration of the method;

Figure 7 shows a graph of the phase of the signal after a number of iterations of the method;

Figure 8 shows a graph of the final phase plot;

Figure 9 shows a block diagram of the main stages of the method;

Figure 10 show a block diagram of a number of method steps; and

Figure 11 shows a block diagram of the remaining method steps.

The estimation of the carrier frequency $f_c$ of a signal with, for example, two phase-modulation states with added noise will now be described.

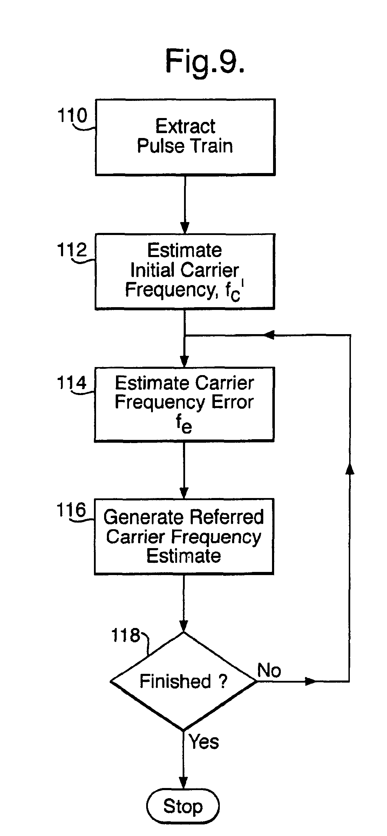

Firstly, in step one of the method as shown in Figure 9 , the signal pulse-train must be extracted from the signal (110). There are two ways this is commonly achieved: 1) a pulse-train is assumed to be a valid signal when its power is greater than a predetermined level for the system, or 2) the use of a correlation technique with a template to find the start of the pulse train. However, knowing the exact starting point of the signal is not important to the outcome of the method.

The second step of the method requires that an initial estimate $f_c'$ of the carrier frequency $f_c$ of the signal is made (112). This can be found, for example, from the highest peak of a Fourier transformation of the signal, i.e., in the frequency domain. This is a common signal processing technique and will therefore not be discussed in detail.

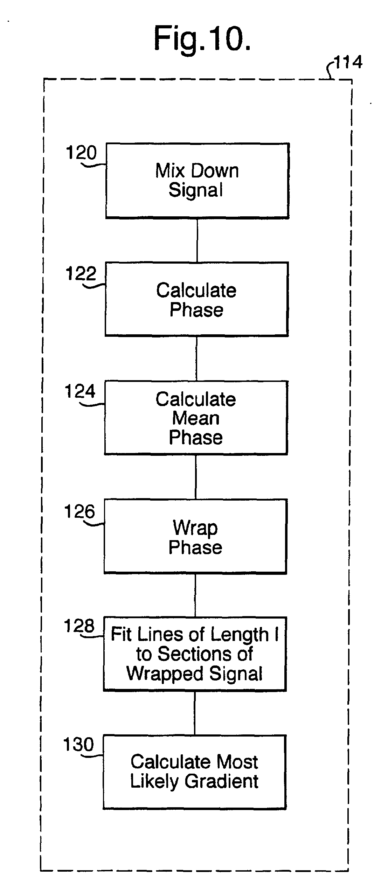

Step three of the method attempts to mix the signal down to 0 Hz by removing the initial estimate $f_c'$ of the carrier frequency (120), resulting in complex (i.e., IQ) data as shown in Figure 10. This procedure is well documented in standard signal processing texts, but is essentially carried out as follows. The signal is multiplied in the time domain by the complex function $e^{i\omega t}$, where $\omega = 2\pi f_c'$ and $f_c'$ is the estimated carrier frequency. This procedure transforms the signal from real to complex. The resultant signal has a component at the difference between $f_c'$ and $f_c$ and an unwanted component at the sum $f_c' + f_c$ which results from the well-known relationship

$$\sin(\omega_1 t) * \sin(\omega_2 t) = \sin([\omega_1 - \omega_2]t) + \sin([\omega_1 + \omega_2]t)$$

where, in this case, $\omega_1$ and $\omega_2$ correspond to $2\pi f_c$ and $2\pi f_c'$, respectively. The high frequency component of the resultant signal is then removed using a low-pass filter. These steps are summarised by the following equation:

$$I(t) = lowpassfilter|s(t)\cos(2\pi f_c')|$$

$$Q(t) = lowpassfilter|s(t) \sin(2\pi f_c')|$$

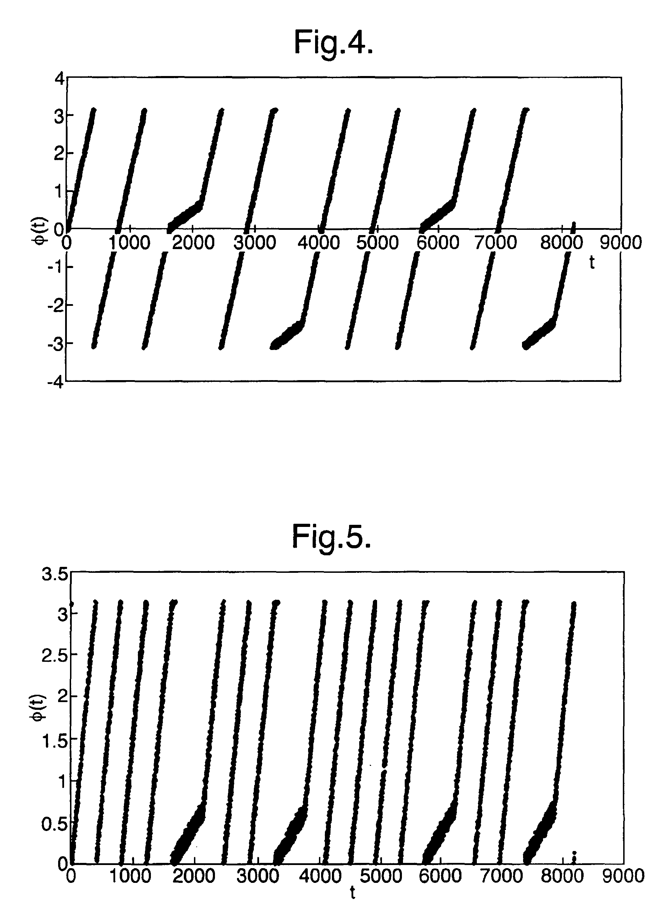

where *s(t)* is the phase modulated signal. *Q(t)* is shown in Figure 3. From this Figure it can be seen that the initial estimate $f_c'$ of the carrier frequency was not accurate. If it had been accurate, only the phase transitions would remain.

The iterative part of the method starts at step four. The first stage of this step is to calculate the phase $\phi(t)$ of the processed data (122) in Figure 10, where

$$\phi(t) = \tan^{-1}\left( \frac{I(t)}{Q(t)} \right)$$

The result of applying this stage of step four to the signal is shown in Figure 4. Two features are clearly seen from this Figure. Firstly, the phase increases with time until it reaches the value $\pi$, at which point the phase jumps discontinuously to $-\pi$ before continuing its upward trend. Secondly, four phase transitions can be seen which interrupt this pattern. It is these phase transitions that prevent conventional unwrapping techniques from being used. It should also be noted that the gradient of the phase versus time plot may be positive or negative, depending on whether the estimate $f_c'$ of the carrier frequency is above or below the actual carrier frequency $f_c$.

The next stage of step four is to calculate the cyclic mean phase (124) and then to wrap the data into a phase range (126) equal to the size of the phase transition, making sure that the cyclic mean of the data is centred halfway through the range. As this example uses a signal with two phase states, we wrap the data into a range from 0 to $\pi$, and shift the cyclic mean to $\pi/2$. The wrapping equations used to perform this operation can be written as follows:

$$\phi(t)_{shifted} = \phi(t) + n\pi - \langle\phi\rangle + \frac{\pi}{2}$$

$$\phi(t)_{wrapped} = \phi(t)_{shifted} - \pi \times floor\left( \frac{\phi(t)_{shifted}}{\pi} \right) \qquad (1)$$

where $\phi(t)$ is the phase, *n* is an integer large enough such that $\phi(t) + n\pi$ is always positive, $\langle\phi\rangle$ is the cyclic mean of $\phi(t)$, and the function *floor(x)* takes the value of the largest integer smaller than x. The factor of $\pi/2$ is introduced because it is equal to half the size of the phase transition.

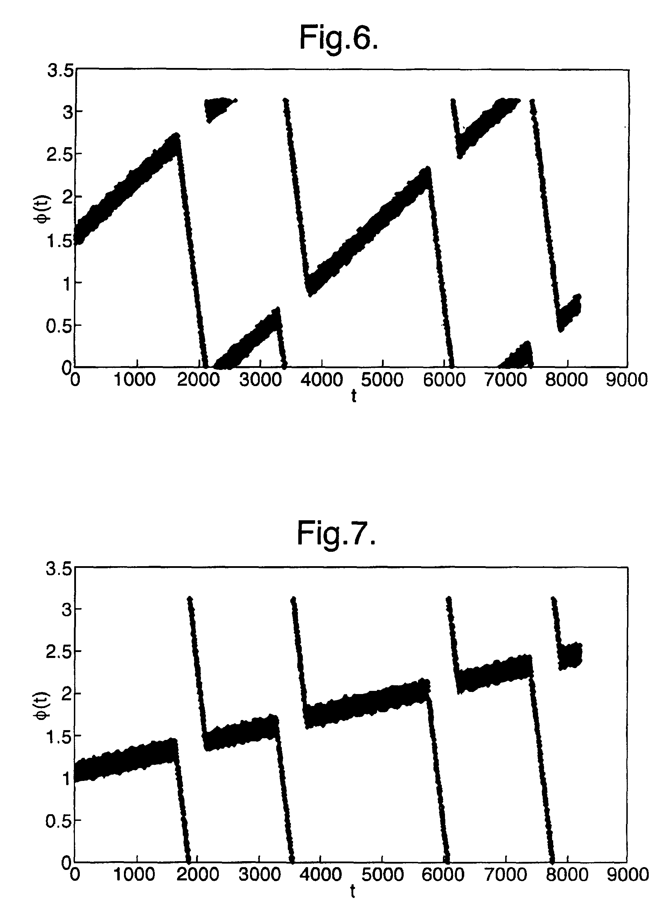

When adding multiples of the phase transition or phase jump (i.e., $n\pi$), the multiple must be large enough to make the phase positive. It should also be large enough to offset any large negative value from the cyclic mean and to offset the fact that (depending on the size of the phase transitions) the phase may be several transition multiples below zero. There is no maximum size for this value although if it is too large, computation accuracy may be compromised. The cyclic mean can be in the range $[0...2\pi]$ or $[-\pi...\pi]$ since it will be wrapped down to the size of a phase transition anyway. Subtracting the cyclic mean and then adding half the phase range in Equation (1) shifts the mean phase of the wrapped data to the centre of the phase wrapping range. Phase wrapping is achieved in this process by subtracting the integer number of multiples of the phase wrapping size from the shifted phase result. This ensures that the final range of the wrapped data is between 0 and the size of one transition. The effect of wrapping the phase in this way is that when the gradient of the phase versus time plot is small enough, a phase transition in the original signal causes a jump in the wrapped phase that will start and end at the same phase value, as shown in Figures 6 or 7.

The cyclic mean is defined as the mean phase of a group of complex data (such as IQ points in a communications signal) whose phase range wraps around from $\phi_1$ to $\phi_2$, e.g. from $-\pi$ to $\pi$. The wraparound causes a simple mean of the phase angles to be invalid, which is the reason for using the cyclic mean. The cyclic mean can be visualised by plotting the phase vectors of the complex data on the Argand plane and then calculating the vector mean. The phase angle of the vector mean is the cyclic mean of the set of data points, and is calculated as follows:

$$\langle\phi\rangle = \tan^{-1}\left( \frac{\sum_{i=1}^{N} \sin\phi_i}{\sum_{i=1}^{N} \cos\phi_i} \right) \qquad (2)$$

where N is the number of data samples, and $\phi_i$ is the phase of the *i*th sample.

The reason for the use of the cyclic mean in this method is to move the maximum density of data points to the centre of the vertical range of the wrapped signal. Then, when the gradient of the phase versus time plots has been completely removed, the resulting horizontal trend line is in the centre of the range. If this were not done, it could result in the first half of the data disappearing off the top of the range, and the second half of the data reappearing at the bottom during an iteration of the algorithm. It would then be impossible to fit a line longer than one of the two segments of data, and therefore the gradient estimation would not get any more accurate. Also, because the maximum density of data points is in the centre of the range, the outlying points during the phase changes are distributed evenly above and below the trend line. This minimises the effect of phase transitions on the gradient of the line of best fit to the data points.

As already stated, if data is centred on the cyclic mean, then the maximum data density is in the centre of the range of data points. This explanation has little intuitive meaning. The position of the mean is simple to understand if we consider a physical example. Imagine the graph shown in Figure 5 rolled into a tube, with the phase axis forming the circumference of the tube. Then, if each data point on the graph is represented by a small weight stuck to the inside of the tube, and the tube set down on a flat surface and allowed to roll freely, when it comes to rest the cyclic mean will be the line directly under the tube where it touches the surface. This is the point of greatest data density. If we further imagine the phase axis of the graph to be printed on a transparent sleeve covering the tube, we can rotate the sleeve so that the centre of the scale ($\pi/2$ here) is aligned with the cyclic mean at the point where the tube touches the flat surface. If the phase axis of the sleeve is now fixed relative to the data and the tube is unwrapped to a flat sheet once more, we will have a graph where the data is centred on the cyclic mean. The result of wrapping the data shown in Figure 4 using the method of the invention is shown in Figure 5.

In step five of the method, short straight lines are fitted to the phase plot (i.e., to sections of $\phi(t)_{wrapped}$) using a least-squares fit or similar technique (128). In the first iteration of the algorithm, it should be ensured that some of the lines are fitted entirely within the non-transition sections of the signal for robust operation. For this reason, the lengths of the straight lines are chosen to be substantially shorter than the expected distance between phase transitions.

In the sixth step a $\chi^2$ measure, for example, is used to examine how well the data fit a straight line model. The lines that fit well will be the ones that do not fall across phase transitions (which are not in general linear) or wrapping discontinuities. An average of the gradient $\langle g \rangle$ of these lines is taken (130). This average gradient is proportional to the difference between the actual carrier frequency $f_c$ and the estimated carrier frequency $f_c$', and is hereinafter referred to as the frequency error $f_e$. Another way of looking at this technique is to imagine we are trying to remove the average gradient of the phase versus time data plot so that it becomes a horizontal line (i.e. it corresponds to 0 Hz).

Of course, there are other known ways of estimating the gradient of a straight line other than the technique described above which can be employed in the present invention as alternatives.

In the next step of the method, an improved estimation of the carrier frequency of the signal is given by adding the current approximation $f_c$' of the carrier frequency to the frequency error $f_e$ calculated from the gradient of the line in the previous step. The improved estimate of the carrier frequency must now be removed from the data. Two alternative methods of achieving this are:

- Mix down the original sample signal by the improved estimation of the carrier frequency using conventional signal processing methods, and reformulate the phase plot to the range 0 to $\pi$. This method has the advantage over other methods in that it is less susceptible to round-off error, although it tends to be computationally intensive.

- Skew the data by the average gradient (140) using $\phi(t) = \phi(t) - \langle g \rangle t$ thereby trying to produce a horizontal line. Keep a running total of the skews that have been applied to the data. This method removes the need to calculate the sines and cosines required for conventional mixing down, and is therefore more suitable for real-time implementation as it is more efficient. Once we have reached the end of the algorithm, the sum of the average gradients measured at each iteration can be converted into a frequency which represents the quantity we are trying to measure, $f_c$.

Using either of these means of removing the current estimate $f_c$' of the carrier frequency results in the phase plot shown in Figure 6.

The improved carrier frequency estimate $f_c$' is then calculated (142) using the following equation: $f_c$' = $f_c$' + $\frac{2\pi}{(9)}$. The line length $l$ is then increased.

Method steps 4 to 7 are now repeated, this time fitting longer straight lines to the phase plot. The next estimate $f_c$' of the carrier frequency will be made from a larger number of data points than the initial estimate, and will therefore be more accurate. The length $l$ of the lines fitted to the data is (usually) increased for each iteration of the algorithm until the line length extends the whole length of the signal. The increase in line length $l$ after each iteration depends on the form of the signal and is likely to be application dependent. As a rule of thumb $l$ can be doubled after each iteration. If $l$ is increased too quickly between iterations then convergence on the optimum carrier frequency measurement cannot be guaranteed. This can be avoided by examining the proportion of "well-fitted" lines to "badly-fitted" lines. The progress of the algorithm can be assessed by monitoring the proportion of well-fitted lines to badly-fitted lines.

One would expect this ratio to increase as the algorithm progresses. If this ratio decreases significantly it may indicate that the line length has been increased too rapidly. By detecting this condition, the line length can be safely decreased until the ratio of well-fitted lines to badly-fitted lines increases again. Well-fitted lines are defined to give a variance of less than a threshold value, whereas badly-fitted lines are define to have a variance above a threshold value.

After several iterations, the data plot appears as in Figure 7. In this Figure, the whole signal appears continuously on the plot with breaks for the phase transitions. The fitted line lengths now cross the transitions without undue effect. This is because the data is centred on the cyclic mean, so the transition points above the trend line have similar effects to the points below the trend line. Even if the transitions are asymmetric the gain in accuracy resulting from using longer sections more than offsets the loss caused by the asymmetry.

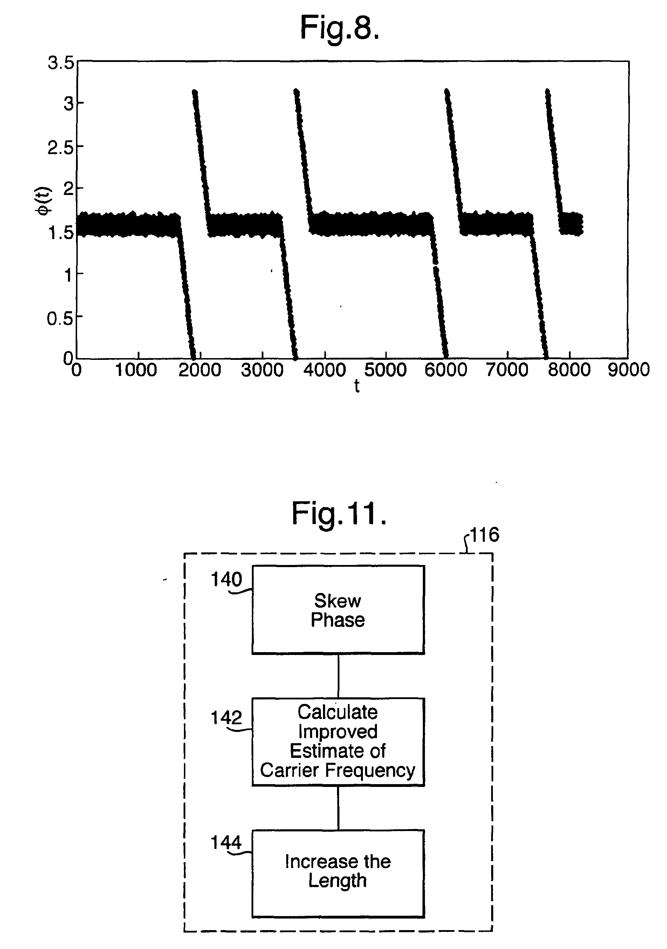

Figure 8 shows the final result of the algorithm after the carrier frequency has been estimated using the whole signal. The phase versus time plot is now a horizontal line, and the carrier frequency $f_c$ of the signal is the sum of the estimated carrier frequencies $fc'$ that have been removed from the signal.

Some advantages of the method disclosed herein over existing methods used for frequency estimation will now be discussed. Firstly, in the method of the invention phase transitions do not need to be identified or removed. This is because the cyclic mean is unwrapped to the middle of the phase range at each iteration (to $\pi/2$ in the case of $\pi$ phase jumps), so approximately the same number of transition points exist in each half of the phase range. This reduces the effect of transition points on the fitting of lines to the data. More accurate results can be obtained by using a robust least-squares method for fitting a straight line to the data. Robust least-squares methods use median values as opposed to mean values and are therefore less sensitive to outliers in the data.

Secondly, when using the method of the invention phase transitions can occur in either direction without affecting the results. When such a phase jump occurs it is wrapped back into the relevant range, so the direction of the jump does not matter. The method will work with any integer multiple of phase jump, provided the noise is smaller than the size of the phase jump.

Another advantage of the method is that wrapping is deterministic and robust, in contrast with conventional unwrapping where the phase transitions' direction and size need to be known or determined somehow during processing. If noise is present it can be difficult to calculate these attributes, and so the unwrapped data may have spurious jumps present that will affect the gradient of the line fitted to it. The proposed wrapping method needs no assumptions to be made about the phase before and after the transition, since it does not use this information. It is therefore robust to noise.

A further advantage of the method is that it is very accurate. This is because all of the data is used in the final frequency estimate. It has accuracy approaching that produced by a conventional line fit to perfectly unwrapped data where the transitions have been removed. It is also much more accurate than using an average of many short line fits. Conventionally, if transitions cannot be removed only the continuous sections between them can be used to estimate the frequency, and these are very short compared to the total data length.

Yet another advantage of the method is that it is iterative and will converge as long as a small enough rate of change of line length is chosen. The algorithm iterates to a good solution by fitting small lines to the data and then adjusting the data and fitting longer lines. In this way, the data are gradually all brought into range so that a long, continuous line can be fitted to give an accurate estimate of the gradient. If the increase in line length *l* from one iteration to the next is too large the algorithm can diverge. However, this can be recognised by examining the accuracy of fit of the lines to the data. The accuracy measure can then be used to produce an algorithm with an adaptive line length that will bring the algorithm back to convergence.

This method can be used in any application where accurate estimation of signal frequency is required, but where the signal is phase modulated such as for example in communications. The nature of the algorithm means that the receiver of the signal need not know the rate or exact form of the modulation, only the number of phase states. The method can also be used to identify Doppler shift in signals such as satellite transmissions received in moving vehicles, or to "lock onto" a phase-modulated carrier.

The method can also be used to distinguish between individual transmitters having nominally the same (but in fact slightly different) carrier frequencies. It can also be used to track small changes in carrier frequency, which can be used as a security measure or to code further information.

**Claims**

1. A method of estimating the carrier frequency of a phase-modulated signal in which the modulation takes the form of a pulse train of phase jumps of a predetermined size such that an integer multiple of phase jumps equals $2\pi$ radians, the method consisting of or including the following steps :

    a) extracting the pulse train from the signal,

b) making an initial estimate of the carrier frequency,

c) estimating the error in the initial estimate,

d) using this error to generate a more accurate estimate of the carrier frequency,

e) repeating steps c) and d) until a sufficiently accurate estimate of the carrier frequency is calculated.

2. A method as claimed in claim 1 in which step c consists of or includes extracting the phase information in the signal, removing the initial estimate of the carrier frequency by mixing the signal down to 0 Hz to give complex IQ data, calculating the phase of the signal as a function of time, calculating the cyclic mean phase, wrapping the data into a phase range equal to the size of the phase jump, and calculating the average gradient of the data for a phase versus time graph, which gradient is proportional to the error in the initial estimate of the carrier frequency.

3. A method as claimed in claim 1 in which step c consists of or includes extracting the phase information in the signal, calculating the phase of the signal as a function of time, calculating the cyclic mean phase, wrapping the data into a phase range equal to the size of the phase jump, and calculating the average gradient of the data for a phase versus time graph, which gradient is proportional to the error in the initial estimate of the carrier frequency, subtracting the average gradient, and summing the average gradient for each iteration.

# Fig.1.

$$\varphi(t) = \tan^{-1}\left(\frac{a}{b}\right)$$

# Fig.3.

# Fig.2a.

# Fig.2b.

# Fig.4.

# Fig.5.

## Fig.6.

## Fig.7.

# Fig.8.

# Fig.11.

# Fig.9.

110 — **Extract Pulse Train**

↓

112 — **Estimate Initial Carrier Frequency, $f_C^I$**

↓

114 — **Estimate Carrier Frequency Error $f_e$**

↓

116 — **Generate Referred Carrier Frequency Estimate**

↓

118 — **Finished ?**

No →

Yes ↓

**Stop**

# Fig.10.

114

120 | Mix Down Signal

122 | Calculate Phase

124 | Calculate Mean Phase

126 | Wrap Phase

128 | Fit Lines of Length I to Sections of Wrapped Signal

130 | Calculate Most Likely Gradient